Europäisches Patentamt

European Patent Office

Office européen des brevets

(19)

(11) Veröffentlichungsnummer: **0 126 973**
**A1**

(12) **EUROPÄISCHE PATENTANMELDUNG**

(21) Anmeldenummer: **84104612.1**

(22) Anmeldetag: **25.04.84**

(51) Int. Cl.³: **G 11 B 21/02**
**G 11 B 5/54**

(30) Priorität: **29.04.83 DE 8312653 U**

(43) Veröffentlichungstag der Anmeldung:
**05.12.84 Patentblatt 84/49**

(84) Benannte Vertragsstaaten:
**AT CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Manzke, Klaus**
**Schulstrasse 10**
**D-6721 Westheim(DE)**

(72) Erfinder: **Weis, Hans-Joachim**
**Naumburger Weg 4**
**D-6800 Mannheim 31(DE)**

(72) Erfinder: **Soehring, Gerhard**
**Horrackerstrasse 23**
**D-6940 Weinheim(DE)**

(54) **Informationsspeicher mit Positioniereinrichtung und Hubmagnet bzw. Verriegelungsmagnet dafür.**

(57) Ein Platten-Informationsspeicher ist mit einer Verriegelungsvorrichtung ausgerüstet, um Transport und/oder Bedienungsschäden zwischen Abtastkopf und Speicherplatte entgegenzuwirken.

Die Verriegelungsvorrichtung besteht aus einem Hubmagneten (18), der ein Zylinder-Erregerspule (32) und eine Ankerplatte (20) umfaßt, wobei an letzterer ein Verriegelungsvorsprung (41) oder ein Reibbelag vorgesehen ist. Bei Betrieb des Plattenspeichers wird die Ankerplatte (20) vom Magneten angezogen. Bei Stromausfall wird sie durch die Rückstellfeder (40) gegen die Führungsplatte (1) gedrückt und wird die Positioniereinrichtung arretiert.

./...

FIG.1

FIG.3a

FIG.3b

Informationsspeicher mit Positioniereinrichtung und Hubmagnet bzw. Verriegelungsmagnet dafür

Die Erfindung betrifft einen Informationsspeicher mit einer zu mindestens einer Informationsspeicherplatte bewegbar gelagerten Abtastkopf-Trag- und Positioniereinrichtung, sowie einen Hubmagnet dafür.

Es sind Informations-Plattenspeicher wie Audio-Plattenspieler, Videoplatten-Aufnahme- und/oder Abspielgeräte sowie Daten-Plattengeräte für mechanische, optische, elektrische oder magnetische Informationsabtastung bzw. -aufzeichnung bekannt.

Wenn diese Plattenspeicher relativ zur Speicherplatte bewegbare Positioniereinrichtungen für die Abtastorgane besitzen, besteht grundsätzlich die Gefahr, daß die Abtastorgane unerwünscht mechanisch beschädigt werden und/oder selbst die Platten beschädigen.

Die Erfindung hat sich daher die Aufgabe gestellt, solche Plattenbeschädigungen weitgehend auszuschalten.

Die Aufgabe wird gemäß der Erfindung gelöst, wenn eine elektrisch steuerbare Verriegelungsvorrichtung zur Sicherung der Abtastköpfe und der Positioniereinrichtung vorgesehen ist.

Die elektrische Steuerbarkeit ist notwendig, um auch bei Stromausfall ausreichende Sicherheit gegen Kopf- und Plattenbeschädigungen bereitstellen zu können.

In zweckmäßiger und wirtschaftlich günstiger Ausführung besteht die Verriegelungsvorrichtung aus einem Hubmagneten, der vorteilhaft eine Zylinder-Erregerspule und eine Ankerplatte umfaßt, wobei an letzterer ein Verriegelungsvorsprung oder ein Reibbelag vorgesehen ist.

Der Hubmagnet nach der Erfindung ist außer bei obengenannter Anwendung natürlich überall dort vorteilhaft einsetzbar, wo es auf schnelle Betätigungen und kleine Hubwege sowie geringen Leistungsbedarf ankommt.

Erfindungsgemäß ist ein solcher Hubmagnet für schnelle Betätigungen und kleine Hubwege, bestehend aus einer Zylinder-Erregerspule in einem Gehäuse und einem Hubanker, insbesondere Verriegelungsmagnet für einen Informationsspeicher, dann gegeben, wenn der Hubanker aus einer Ankerplatte De/ro mit daran befestigtem Stößel besteht und die Ankerplatte parallel zur Stirnseite der Erregerspule und des Gehäuses angeordnet ist.

Damit wird eine sehr kleine kompakte Bauweise erreicht bei relativ großer Zugkraft, wobei der Luftspalt vorteilhaft für einen guten Wirkungsgrad nur zwischen der äußeren Ringfläche des Gehäuses und der Ankerplatte auftritt. Der Hubmagnet ist außerdem wirtschaftlich günstig herstellbar bei hoher Betriebszuverlässigkeit.

In weiterer zweckmäßiger Ausführung weist der Stößel einen Teil mit einem ersten Durchmesser und nahe dem Verbindungsende mit der Ankerplatte einen Teil mit einem größeren zweiten Durchmesser auf, wobei letzterer zumindest teilweise im Magnetfeld der Erregerspule angeordnet ist. Damit wird zugleich die Führung des Stößels verbessert, und die auf den Stößel wirkende Magnetkraft wird optimal für die Hubbewegung genutzt, bei möglichst geringer Stößelmasse. Das Gehäuse des Hubmagneten besitzt entsprechend eine erste Bohrung mit einem Durchmesser für den ersten Stößelteil und eine größere Bohrung für den Durchmesser des größeren Stößelteils.

In der größeren Bohrung ist koaxial über dem ersten Stößelteil eine Rückstell-Druckfeder vorgesehen.

Zweckmäßig ist direkt an der Ankerplatte ein Arretiervorsprung oder ein Reibbelag vorgesehen.

Vorzugsweise besitzt der Hubmanget gemäß der Erfindung ein Magnetkraft/Volumenverhältnis M/V von mindestens 300 mN/cm$^3$ und insbesondere von größer als 500 mN/cm$^3$. Damit wird gegenüber bekannten Hubmagneten ein zwei- bis 4-fach besseres Magnetkraft/Volumen-Verhältnis erreicht, so daß bei raummäßig gedrängten Geräten, z.B. sogenannten Festplattenspeichergeräten oder Druckgeräten usw., eine weit effektivere Raumausnutzung ermöglicht wird.

Einzelheiten der Erfindung sind anhand von in Zeichnungen dargestellten Ausführungsbeispielen nachfolgend beschrieben.

Es zeigen
Figur 1 einen Linear-Positionierer mit Schrittmotor
Figur 2 einen schematischen Schwenkarm-Positionierer
Figur 3a und 3b einen erfindungsgemäßen Hubmagneten in bestromter bzw. stromloser Stellung.

Ein Motor 23, der am Gerätechassis 4 angeflanscht ist, trägt auf seiner Motorwelle 8 ein Spulrad 3, welches mit einem Klemmstück 24 festgeklemmt ist. Um das Spulrad 3 ist ein Stahlband 7 geschlungen, dessen beide Enden mit der Führungsplatte 1 für die Magnetkopfeinheit 22 fest verbunden sind. Im Zuge des Stahlbandes, das in Längsrichtung unelastisch ist, ist überraschend vorteilhaft keinerlei Federglied zur Erzeugung einer Vorspannung notwendig, da ein solches die Positionierung ungenauer machen würde. Die Führungsplatte 1 stützt sich einerseits auf dem Umfang des Spulrades 3, andererseits über Wälzlager 25a, 25b auf einem Lagerträger 2 ab, welcher seinerseits am Gerätechassis 4 starr befestigt ist.

Mittig zu dem Spulrad 3 und dem Lagerträger 2 ist ein Lagerbügel 6 angeordnet, der über Wälzlager 9a, 9b auf die oberen Führungsflächen 15a, 15b der Führungsplatte 1 drückt. Diese Druckkraft wird mittels eines vorgespannten Federblechs 5, über das der Lagerbügel 6 mit dem Gerätechassis 4 verbunden ist, auf die Führungsplatte 1 in Richtung 16 ausgeübt.

Die Führungsplatte 1 mit ihren seitlichen Führungsflächen 10a, 10b liegt gemäß einer bevorzugten Ausführungsform der Erfindung unter einem Schrägungswinkel 17 auf Wälzlagern 25a, 25b des Lagerträgers 2 auf und wird durch diese Lagerführung in ihrer Lage im Gerätechassis 4 bestimmt.

Die Anordnung der beschriebenen Wälzlagerpaare, die praktisch als Rillenkugellagen ausgebildet sein können, kann auch prinzipiell umgekehrt sein, die stationären Lager oben und die kardanisch beweglichen Lager unten oder aber auch rechts und links, jeweils bezogen auf die Bewegungsrichtung der Führungsplatte mit den Gegenständen geringer Masse z.B. dem oder den Abtastorganen etc..

Durch die Art der Anordnung der Wälzlager 9a, 9b, 25a, 25b, 30a, 30b relativ zu den Führungsflächen 15a, 15b, 10a, 10b wird eine linienförmige Auflage zwischen Lagern und Führungsplatte erreicht, wodurch eine erhebliche Herabsetzung der Flächenpressung und dadurch eine verschleißarme Führung erhalten wird.

Mit 18 ist ein Hubmagnet bezeichnet, der an irgendeiner Stelle unterhalb der Führungsplatte 1, die als Träger für die Kopfeinheit 22 dient, angeordnet ist, und der einen Reibkörper 19 aufweist, der auf der Ankerplatte 20 befestigt ist und an der Unterseite der Platte 1 angreift, wenn er betätigt wird. Der Antriebsmotor 23 ist ein Schrittmotor, der üblicherweise durch Steuerimpulse gesteuert wird. Daher ist es notwendig, bei Stromausfall in jeder Stellung die Führungsplatte 1 mit der Kopfeinheit 22 arretieren zu können.

**0126973**

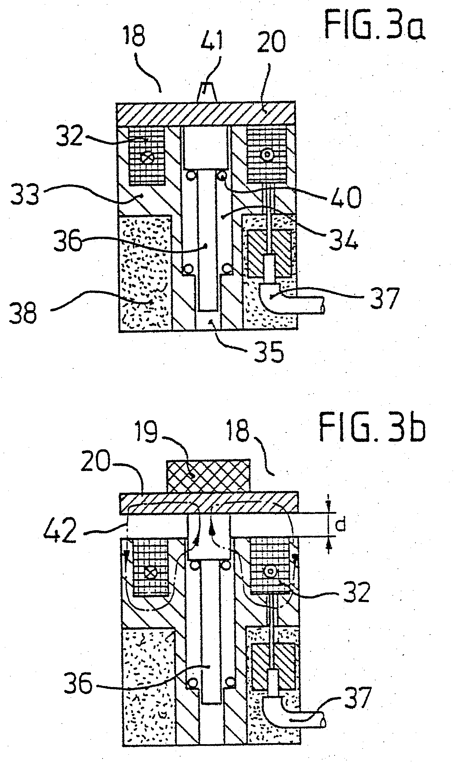

Wird der Hubmagnet 18 also bei Betrieb des Plattenspeichers bestromt, so wird und bleibt die Ankerplatte 20 angezogen, so daß die Führungsplatte 1 in ihren Lagern frei längsbeweglich ist. Bei Stromausfall fällt der Anker ab und die Rückstellfeder 40 (vgl. Figur 3) drückt die Ankerplatte 20 mit dem Reibkörper 19 gegen die Führungsplatte 1, wodurch diese in beliebiger Stellung arretiert wird.

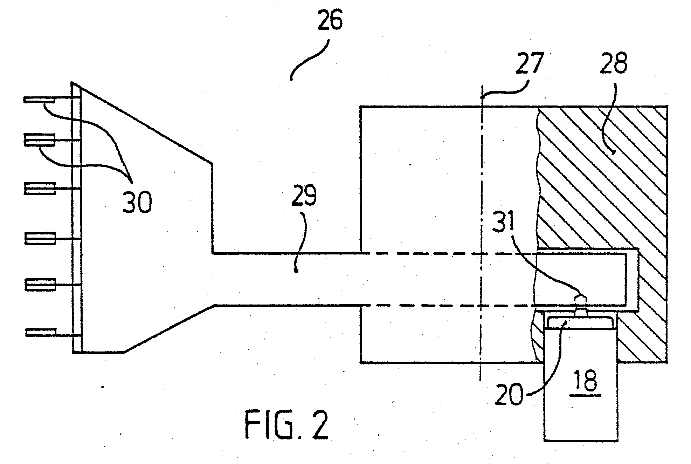

In Figur 2 ist ein Schwenkarmpositionierer 26 schematisch mit Drehachse 28, Antriebseinheit 28, Schwenkarm 29 und Köpfen 30 dargestellt.

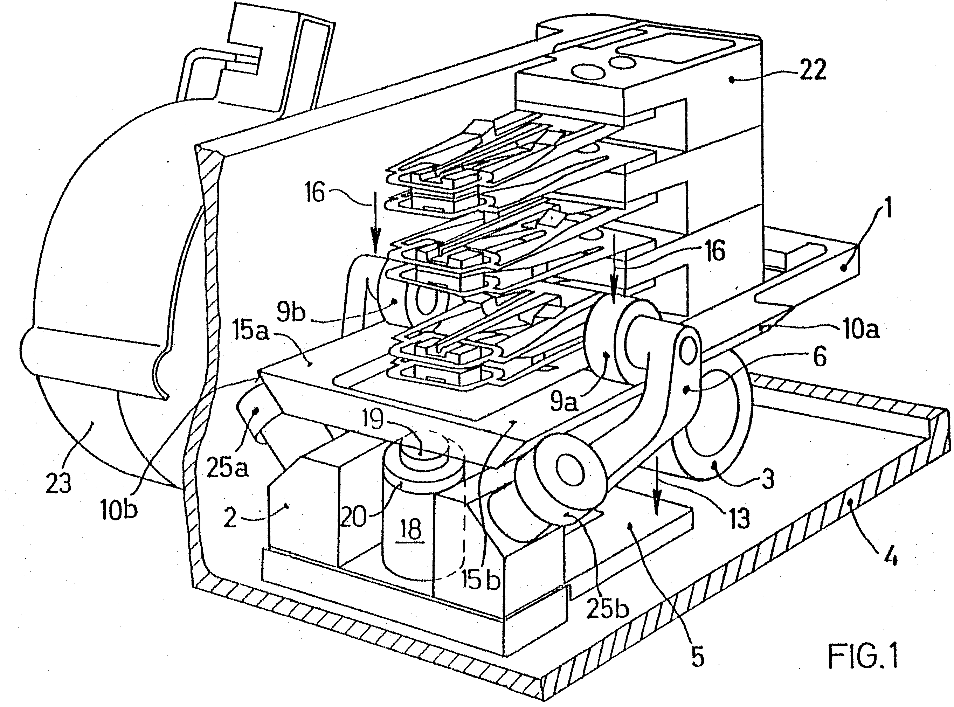

Ein Hubmagnet 18 ist unter dem hinteren Antriebsende des Schwenkarms 29 angeordnet, wobei im Schwenkarm selbst eine Vertiefung 31 und an der Ankerplatte 20 des Hubmangets ein passender Zapfen 41 vorgesehen ist. Bei Stromausfall wird der im allgemeinen mit Gleichstrom betriebene Schwenkarm 29 durch das noch vorhandene Magnetfeld in die Verriegelungsstellung gezogen und dort über die Federkraft des Hubmagnets 18 arretiert. Natürlich ist es auch möglich, zur Arretierung, wie in Figur 1, einen Reibkörper als Arretierungselement zu verwenden, eine formschlüssige Arretierung hat sich jedoch sehr bewährt, da auf die Lager kein ständiger Druck ausgeübt wird.

Figur 3 zeigt den Aufbau des Hubmagnets 18 im einzelnen. In Figur 3a ist der bestromte Zustand und in Figur 3b der stromlose oder momentan bestromte Zustand dargestellt. Unter der Ankerplatte 20 ist die Ring- oder Zylinderspule 32 als Erregerspule vorgesehen, die in einem Gehäuse 33 untergebracht ist. Das Gehäuse 33 ist mit zwei hintereinander liegenden Bohrungen 34 und 35 ausgebildet, in der der Stößel 36 geführt längsbeweglich ist. Der Stößel 36 besteht aus einem langen Teil mit kleinerem Durchmesser und einem kurzen Teil mit größerem Durchmesser, wobei letzterer unmittelbar an der Ankerplatte 20 befestigt ist. Die Bohrung 34 dient dem größeren und die Bohrung 35 dient dem kleineren Stößelteil als Führung. Eine Stromzuführung 37 ist in eine geeignete Vergußmasse 38 eingegossen. Die Rückstellfeder 40 ist zwischen dem größeren Stößelteil und dem Bohrungstrennrand 39 angeordnet. Während die Feder 40 in Figur 3a zusammengedrückt ist, ist sie in Figur 3b freigegeben und drückt den Stößel 36 mit der Ankerplatte 20 um den Hubweg d nach oben.

Wie in Figur 3b angedeutet, verlaufen die Feldlinien 42 nach Einschalten nur in der Nähe des äußeren Umfangs des Gehäuses 33 im Luftspalt, so daß ein hoher Wirkungsgrad erreicht wird. Der Ringspalt zwischen dem größeren Stößelteil und der Bohrung 34 ist wegen der Führungsaufgabe des Gehäuses 33 sehr klein ausgeführt, so daß dieser Spalt als Luftspalt vernachlässigbar wird. Im angezogenen Zustand in Figur 3A ist ein vollkommen geschlossenes Magnetfeld mit hoher Haltekraft vorhanden. Der Aufbau des Hubmagneten 18 hat einen geringen Leistungsbedarf zur Folge und besitzt einen hohen Wirkungsgrad. Setzt man seine Hubkraft (M) und sein Volumen (V) ins Verhältnis, so wird ein überraschend günstiger Wert von M/V von mindestens 30 pond/cm$^3$ ($\sim$300 mN/cm$^3$), vorzugsweise größer als 50 pond/cm$^3$ ($\sim$500 mN/cm$^3$) erreicht.

Der beschriebene Hubmagnet mit einer Erregerspule von 175 Windungen und einem Ohmschen Widerstand von 6 $\Omega$ weist eine Länge von 18,5 mm einschließlich der Ankerplatte auf bei einem Durchmesser von 13 mm. Der Anzugsimpuls betrug $\sim$1,5 A/50 msec und der Leistungsverbrauch belief sich auf lediglich $\sim$1 Watt bei 100 % Einschaltdauer, also bei Dauereinschaltung. Der Hub betrug d = 1 mm bei einer Hubkraft von 180 pond (1,8 N).

Ein handelsüblicher Hubmanget hat demgegenüber folgende Kennwerte

| | |
|---|---|
| Länge 37 mm | (vgl. Prospekt Nr. 5/1970, |
| Durchmesser 20 mm | S. 17 Hub-Magnet Typ GL 20/A3 |
| Hubkraft 150 p/1,5 N) | der Neue Hahn-Magnet GmbH |
| Hub 3 mm | & Co. KG, |
| Leistungsbedarf 4 W | 7791 Engelswies-Messkirch) |

Das M/V-Verhältnis für diesen Magnet beträgt 13 p/cm$^3$ (130 mN/cm$^3$) und ist damit um mehr als den Faktor 2 kleiner als das minimal erreichbare M/V-Verhältnis des erfindungsgemäßen Magnets, der noch dazu nur ein Viertel des Leistungsbedarfs hat.

Kleinere Hubmagnete als den oben genannten sind unseres Wissens nicht handelsüblich.

Der erfindungsgemäße Hubmagnet erreichte mit den oben angegebenen Daten ein M/V-Verhältnis von 76 p/cm$^3$ (760 mN/cm$^3$) was fast dem 6-fachen Wert gegenüber dem Stand der Technik entspricht.

Der erfindungsgemäße Hubmagnet wurde in Verbindung mit einem Positioniersystem für Plattenspeicher, insbesondere für Magnetplattenspeicher, beispielhaft beschrieben. Aufgrund der günstigen technischen Daten, insbesondere hinsichtlich des M/V-Verhältnisses ist ein Einsatz in allen kompakten Geräten vorteilhaft, in denen Betätigungsvorgänge auf kleinstem Raum stattzufinden haben, wie auch z.B. in Schreibmaschinen, Druckern, Steuerungsanlagen, aber auch in Plattenspielern, Kassettenrekordern usw.. In der Funktion können Betätigungen ausgeführt, also Bewegungsvorgänge ausgelöst oder gestoppt werden, wenn auch oben nur Arretier- oder Bremsanwendungen beschrieben sind. Die Bewegungen, die ausgelöst oder gebremst werden sollen, können geradlinig oder kurvenförmig oder kreisend sein. So kann auch eine drehende Rolle oder z.B. der Außenläufer eines Motors ebenso gebremst werden, wie die Drehung eines Innenläufers eines Motors. Es ist theoretisch auch denkbar, derartige erfindungsgemäße Hubmagnete zu verwenden, um Abtastköpfe, die zum Betrieb mit einem Medium in Kontakt stehen, direkt durch Anheben/Absenken außer in Kontakt zu bringen z.B. um den Betrag von 1 mm (dem Hub d des Beispiel-Magneten).

Patentansprüche

1. Informationsspeicher mit einer zu mindestens einer Informationsspeicherplatte bewegbar gelagerten Abtastkopf-Trag- und Positioniereinrichtung (26, 1), dadurch gekennzeichnet, daß eine elektrisch steuerbare Verriegelungsvorrichtung, insbesondere ein Hubmagnet (18), zur Sicherung der Abtastköpfe (22, 30) und der Positioniereinrichtung (26, 1) vorgesehen ist.

2. Informationsspeicher gemäß Anspruch 1, dadurch gekennzeichnet, daß der Hubmagnet (18) aus einer Erregerspule (32) und einer Ankerplatte (20) besteht und an letzterer ein Verriegelungsvorsprung (41) vorgesehen ist, der im Verriegelungsfall in eine Vertiefung (30) der Kopftrageinrichtung (29) eingreift.

3. Speicher nach Anspruch 1 und 2, dadurch gekennzeichnet, daß statt des Verriegelungsvorsprungs (41) ein Reibbelag (19) an der Ankerplatte (20) vorgesehen ist.

4. Hubmagnet für schnelle Betätigungen und kleine Hubwege bestehend aus einer Erregerspule in einem Gehäuse (33) und einem Hubanker, insbesondere Verriegelungsmagnet für einen Informationsspeicher nach Anspruch 1, dadurch gekennzeichnet, daß der Hubanker aus einer Ankerplatte (20) mit daran befestigtem Stößel (36) besteht und die Ankerplatte (20) parallel zur Stirnseite der Erregerspule (32) und des Gehäuses (33) angeordnet ist.

5. Magnet nach Anspruch 4, dadurch gekennzeichnet, daß der Stößel (36) einen Teil mit einem ersten Durchmesser nahe dem Verbindungsende mit der Ankerplatte (20) einen Teil mit größerem Durchmesser aufweist, der zumindest teilweise innerhalb des Magnetfeldes der Spule (32) angeordnet ist.

6. Magnet nach Ansprüchen 4 und 5, dadurch gekennzeichnet, daß das Gehäuse (33) eine erste Bohrung (34) mit etwa dem Durchmesser des größeren Stößelteils und eine zweite Bohrung (35) für den Stößelteil mit etwa dem kleineren Durchmesser besitzt.

7. Magnet nach Ansprüchen 4 bis 6, dadurch gekennzeichnet, daß in der größeren Gehäusebohrung (34) eine Rückstell-Druckfeder (40) vorgesehen ist.

8. Magnet nach Ansprüchen 4 bis 7, dadurch gekennzeichnet, daß an der freien Seite der Ankerplatte (20) ein Arretiervorsprung (41) oder ein Reibbelag (19) vorgesehen ist.

9. Magnet nach Ansprüchen 4 bis 8, dadurch gekennzeichnet, daß derselbe ein Magnetkraft/Volumenverhältnis M/V von mindestens 300 $mN/cm^3$, vorzugsweise größer als 500 $mN/cm^3$ aufweist.

Zeichn.

FIG.1

O.Z. 0050/36491

0126973

1/3

FIG. 2

FIG.3a

FIG.3b

Europäisches Patentamt

# EUROPÄISCHER RECHERCHENBERICHT

**0126973**
Nummer der Anmeldung

EP  84 10 4612

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | IBM TECHNICAL DISCLOSURE BULLETIN, Band 25, Nr. 11A, April 1983, New York, USA; J.R. REIDENBACH "Carriage latch for disk file", Seiten 5404, 5405 * Seiten 5404-5405 * | 1,2,4, 7,8 | G 11 B   21/02<br>G 11 B    5/54 |
| | --- | | |
| P,X | EP-A-0 094 504  (IBM) * Anspruch 1; Figuren 1, 2 * | 1 | |
| | --- | | |
| A | US-A-3 870 320  (L.A. TORRINGTON) *  Spalte 3, Zeilen 3-37; Figur 1 * | | |
| | ----- | | |

**RECHERCHIERTE SACHGEBIETE (Int. Cl. ³)**

G 11 B    3/38
G 11 B    5/54
G 11 B   21/00

Der vorliegende Recherchenbericht wurde für alle Patentansprüche erstellt.

| Recherchenort<br>BERLIN | Abschlußdatum der Recherche<br>18-07-1984 | Prüfer<br>ROGNONI M.G.L. |
|---|---|---|